# DEMANDE DE BREVET EUROPEEN

(11) **EP 3 351 111 A1**
(43) Date de publication de la demande: **25.07.2018**
(21) Numéro de dépôt: 18152037.0
(22) Date de dépôt: 17.01.2018
(51) Int. Cl.: A23G 3/20, A23G 3/28, A23G 7/02

(54) **DISPOSITIF DE MARQUAGE DE PIÈCES DE CONFISERIE ENROBÉES DE CHOCOLAT**

(30) Priorité: 18.01.2017 FR 1750389
(71) Demandeur: Brunstein, Pascal, 75116 Paris (FR); Noeppel, Philippe, 67113 Blaesheim (FR)
(72) Inventeur: Brunstein, Pascal, 75116 Paris (FR); Noeppel, Philippe, 67113 Blaesheim (FR)
(74) Mandataire: Cabinet Bleger-Rhein-Poupon

(57) **Abrégé**

Dispositif de marquage de pièces de confiserie enrobées de chocolat caractérisé en ce qu'il comporte :
- une bande de transfert desdites pièces de confiserie enrobées de chocolat,
- un rouleau de marquage dont la surface cylindrique présente un motif en relief, monté en rotation au-dessus de ladite bande de transfert et transversalement au sens de déplacement de cette dernière,
- des moyens de réglage de la hauteur dudit rouleau par rapport à ladite bande, et de la distance le séparant de celle-ci,
- et des moyens internes de réfrigération et de maintien à une température constante dudit rouleau
- des moyens (12) de génération d'un flux d'air froid et sec dirigé vers la surface du rouleau (5), en amont de la zone d'entrée en contact de celui-ci avec lesdites pièces de confiserie (2).

## Description

La présente invention entre dans le domaine de la fabrication industrielle de pièces de confiserie chocolatées.

L'invention concerne particulièrement un dispositif de marquage de pièces de confiserie enrobées de chocolat, ou de bonbons, pièces intégralement en chocolat.

Un tel dispositif trouvera une application particulière dans le domaine des industries chocolatières, de type chocolaterie ou confiserie.

De manière connue, les bonbons en chocolat ou les confiseries enrobées de chocolat peuvent bénéficier d'un motif de surface personnalisé.

Selon une technique connue, le motif en surface d'une pièce chocolatée peut être obtenu en moulant la pièce chocolatée dans un moule présentant des reliefs particuliers formant ainsi le motif sur la pièce après démoulage.

Cette technique présente comme inconvénient de nécessiter un moule spécifique par motif et présente des risques de dégradation du motif lors du démoulage de la pièce en chocolat.

Selon une autre technique connue, le motif en surface des pièces de confiserie enrobées de chocolat peut être réalisé par apposition d'une couche supplémentaire en relief que l'on va venir ajouter au-dessus du bonbon en chocolat. Cette technique nécessite d'avoir des moules spécifiques et un encollage par la suite de la couche supplémentaire en relief sur le bonbon existant. Cette technique nécessite d'apposer manuellement sur chaque bonbon de chocolat existant la couche supplémentaire.

Cette technique est donc longue et couteuse et ne permet pas la fabrication en une seule étape de pièces de confiserie enrobées de chocolat à motif.

Selon une autre technique connue, le motif peut être réalisé manuellement à l'aide de tampons en aluminium qui viennent au contact de chaque pièce en chocolat pour y laisser leur marque. Le motif persiste sur la pièce en chocolat lors du refroidissement de cette dernière. En effet, une réaction thermique se produit en surface du bonbon chocolaté. En effet, les pièces de confiserie enrobées de chocolat sont à une température de l'ordre de 29° C à 33 °C après l'opération d'enrobage, tandis que le tampon à motif est à une température de l'ordre de -2°C à -8°C. Le contact du tampon avec le bonbon en chocolat permet de le marquer. Après contact tampon/bonbon de chocolat, le bonbon de chocolat enrobé marqué va refroidir en gardant en surface le motif dudit tampon.

L'utilisation d'un tampon présente comme inconvénient d'être effectué manuellement par les opérateurs. Ces derniers doivent agir vite après l'opération d'enrobage pour ne pas oublier de marquer un bonbon de chocolat et éviter que le chocolat ne refroidisse avant son marquage. En outre, les opérateurs utilisant ses tampons doivent également être diligents concernant le moment d'application du tampon sur le bonbon en chocolat et la température du tampon ceci afin que le marquage puisse se faire. Une expertise et un savoir-faire manuel sont donc nécessaires pour marquer les bonbons de chocolat par tampon.

On connaît par le document WO 98/30111 un procédé de décoration qui consiste à utiliser, dans une tunnel, un rouleau positionné au-dessus de plateaux de refroidissement rigides, sur lesquels sont disposés des bonbons en chocolat, ledit rouleau présentant en surface des décors à reproduire sur lesdits bonbons. Dans ce document le rouleau est refroidi en interne ou par l'environnement dudit tunnel. Ce procédé n'a jamais été mis en oeuvre, car le résultat obtenu n'était pas conforme aux attentes. En effet, dans le cas d'un refroidissement du rouleau par l'environnement du tunnel, il est évident que les bonbons sont également refroidis et que le marquage ne peut être optimal. Lorsque le rouleau est refroidi en interne, il se forme en surface du givre, ce qui génère un blanchiment du chocolat en surface, ce qui le rend inadapté à la commercialisation.

La présente invention a pour but de trouver une solution alternative permettant de marquer des pièces de confiserie enrobées de chocolat industriellement et qui soit rapide, évitant les risques d'erreur, d'oubli ou d'absence de marquage liés à l'intervention humaine, tout en conservant au chocolat son aspect brillant.

La présente invention a pour but de pallier les inconvénients de l'état de la technique, en proposant un dispositif de marquage de pièces de confiserie enrobées de chocolat.

Ainsi, ce dispositif comporte une bande de transfert desdites pièces de confiserie enrobées de chocolat, permettant le déplacement des pièces de confiserie enrobées de chocolat en sortie d'enrobeuse.

Ce dispositif comporte également un rouleau de marquage dont la surface cylindrique présente un motif en relief, destiné à venir au contact des pièces de confiserie enrobées de chocolat pour les marquer. Ledit rouleau est monté en rotation au-dessus de ladite bande de transfert, et transversalement au sens de déplacement de cette dernière.

Le rouleau est mû en rotation, à une vitesse linéaire, réglable, égale à la vitesse de déplacement de la bande de transfert.

Ledit dispositif de l'invention comporte également des moyens de réglage de la hauteur dudit rouleau par rapport à ladite bande, et de la distance le séparant de celle-ci. Ces moyens de réglage de la hauteur du rouleau permettent d'ajuster la position du rouleau par rapport aux pièces de confiserie enrobées de chocolat afin qu'il y ait un contact entre le rouleau et les pièces de confiserie enrobées de chocolat que l'on souhaite marquer.

De plus, ledit dispositif comporte des moyens de réfrigération et de maintien à une température constante dudit rouleau. Ainsi, le rouleau de marquage reste toujours à la température adéquate pour permettre le marquage après enrobage au chocolat des pièces de confiserie. Il n'y a aucun risque que le marquage n'ait pas lieu suite à une température inadaptée du rouleau de marquage.

D'autre part, des moyens de génération d'un flux d'air froid et sec dirigé vers la surface du rouleau, en amont de la zone d'entrée en contact de celui-ci avec les pièces de confiserie.

Le flux d'air froid et sec est destiné à empêcher la formation de givre en surface du rouleau refroidi, et donc le blanchiment du chocolat.

De manière avantageuse, le flux d'air froid et sec est produit selon une ligne selon une génératrice du rouleau, et préférentiellement mais non limitativement, selon une pression comprise entre 0,5 et 1 bar.

En outre, selon une autre caractéristique du dispositif de la présente invention la partie menée de ladite bande de transfert est associée à des moyens amortisseurs. Ces moyens amortisseurs permettent d'éviter un écrasement des pièces de confiserie enrobées de chocolat entre la bande de transfert et le rouleau de marquage et de compenser une variation de hauteur des pièces de confiserie. Ainsi, ces moyens garantissent une conservation du volume et de la structure que possède la pièce de confiserie enrobée de chocolat en sortie d'enrobeuse.

La présente invention concerne également une enrobeuse à chocolat de pièces de confiserie comprenant un circuit d'enrobage muni d'au moins de moyens pour tempérer le chocolat, de moyens de recouvrement de chocolat permettant son enrobage et de moyens de déplacement desdites pièces sur l'intégralité dudit circuit d'enrobage.

Avantageusement, l'enrobeuse de l'invention comporte en aval, et en sortie dudit circuit d'enrobage, le dispositif de marquage de pièces de confiserie enrobées de chocolat de l'invention.

De manière particulière, les moyens de déplacement de ladite enrobeuse sont confondus avec ladite bande de transfert en sortie dudit circuit d'enrobage.

De cette manière, les pièces de confiserie enrobées de chocolat sont directement marquées après l'opération d'enrobage. Ainsi, l'enrobeuse de l'invention consiste en une seule machine permettant à la fois d'enrober et de marquer les pièces de confiserie de manière entièrement automatique et industrielle.

Selon une autre caractéristique particulière de l'invention, l'enrobeuse de la présente invention comporte une enceinte à hygrométrie contrôlée, ladite enceinte contenant au moins le dispositif de marquage. Ladite enceinte comporte ainsi des moyens permettant de contrôler l'hygrométrie lors du processus de marquage des pièces de confiserie enrobées de chocolat, et notamment de maintenir une hygrométrie faible, de sorte à éviter le blanchiment dudit chocolat lors du marquage.

D'autres caractéristiques et avantages de l'invention ressortiront de la description détaillée qui va suivre des modes de réalisation non limitatifs de l'invention, en référence aux figures annexées sur lesquelles :
- la figure 1 représente une vue schématique en perspective du dispositif de marque de pièces de confiserie enrobées de chocolat,
- la figure 2 représente une vue schématique en perspective du rouleau de marquage cylindrique avec des motifs à relief.

La présente invention concerne un dispositif de marquage 1 de pièces de confiserie enrobées de chocolat 2.

On entend par le terme « pièces de confiserie enrobées de chocolat 2 » tout type de friandises, que l'on peut enrober de chocolat, notamment à l'aide d'une enrobeuse, tel que par exemple des fruits confits, et de préférence des bonbons de chocolat.

Ledit dispositif de marquage 1 consiste en un châssis 11 présentant en partie supérieure 111 une bande de transfert 3.

Ainsi, ledit dispositif de marquage 1 comporte une bande de transfert 3 où sont reposées, lors de l'opération de marquage, lesdites pièces de confiserie enrobées de chocolat 2.

Ladite bande de transfert 3 est mobile et permet le transport et le déplacement des pièces de confiserie enrobées de chocolat 2.

Avantageusement, ladite bande de transfert 3 est dans une matière souple et flexible présentant une innocuité vis-à-vis desdites pièces 2.

Selon un mode de réalisation privilégié, ladite bande de transfert consiste en une bande sans fin tendue entre deux rouleaux 4.

Ainsi, la bande de transfert 3 présente une partie menée 31, où reposent lesdites pièces de confiserie 2, lors de l'opération de marquage.

Selon une spécificité de l'invention, ledit dispositif de marquage 1 comporte un rouleau de marquage 5.

Ledit rouleau de marquage 5 présente sur sa surface cylindrique un motif en relief 6. Ce motif 6, après l'opération de marquage, est reproduit sur l'une des faces des pièces de confiserie enrobées de chocolat 2.

Selon l'invention, ledit rouleau 5 est monté mobile en rotation au-dessus de ladite bande de transfert 3, le montage dudit rouleau 5 est réalisé à l'aide de tous moyens connus de l'homme du métier. L'entraînement en rotation est réalisé par une motorisation, la vitesse étant réglable au travers d'un potentiomètre.

Avantageusement, ledit rouleau 5 est amovible, il peut donc être remplacé par un autre rouleau de marquage présentant un motif différent ou par exemple en cas d'anomalie, ou pour être nettoyé.

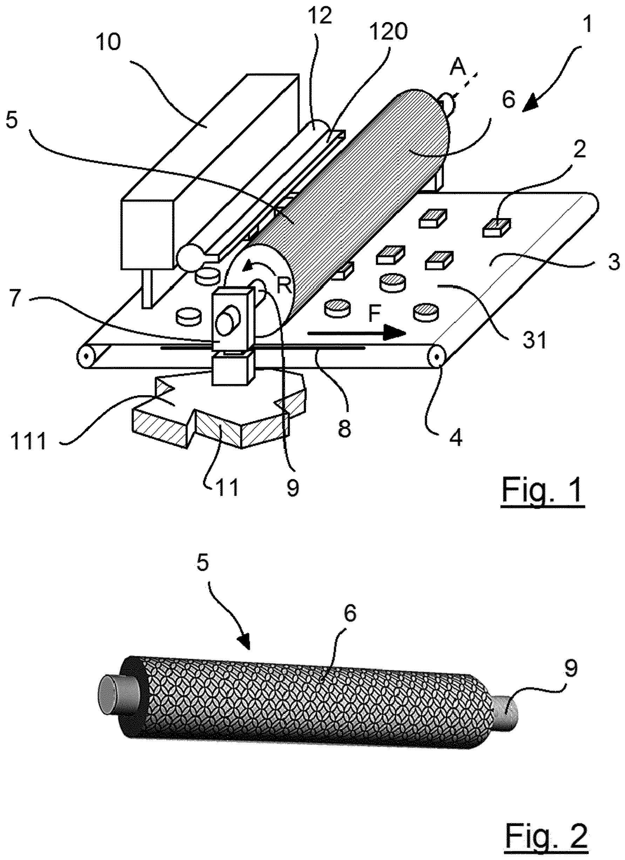

Selon l'invention, ledit rouleau 5 est monté transversalement au sens de déplacement F de la bande de transfert 3 tel que visible sur la figure 1.

Ainsi, lors du déplacement de la bande de transfert 3 supportant les pièces de confiserie enrobées de chocolat 2, au contact desdites pièces 2, le rouleau 5 va être entraîné en rotation R autour de son axe central A. La rotation du rouleau 5 au contact des pièces enrobées de chocolat 2 va générer une empreinte sur lesdites pièces 2 et les marquer.

En outre, par rapport au dispositif de tampon existant, ledit rouleau 5 ne nécessite pas de sélectionner ou de paramétrer la position des pièces 2 dans le plan de la bande de transfert 3. En effet, la longueur du rouleau 5 recouvrant transversalement l'intégralité de la bande de transfert 3, peu importe la position des pièces 2 sur ladite bande 3, elles seront toutes atteintes par le motif 6 lors du processus de marquage.

Selon un mode de réalisation particulier, la vitesse de déplacement de ladite bande de transfert 3 pour un point est comprise entre 2 et 6 mètres/minute. Cette vitesse a été jugée nécessaire dans une utilisation dudit dispositif de marquage 1 de l'invention dans le domaine des chocolateries industrielles, notamment celles qui fabriquent des bonbons chocolatés enrobés.

Pour que le marquage des pièces 2 enrobées de chocolat ait lieu, en plus de la vitesse de déplacement de la bande de transfert 3, il est nécessaire que le motif en relief 6 du rouleau 5 entre en contact avec la pièce 2.

C'est pourquoi un réglage de la hauteur du rouleau 5 par rapport à la bande 3, plus précisément par rapport aux pièces 2 est obligatoire.

En conséquence et tel qu'illustré sur la figure 1, le dispositif 1 de l'invention comporte également des moyens de réglage 7 de la hauteur dudit rouleau 5 par rapport à ladite bande de transfert 3.

Ces moyens de réglages 7 consistent en tout moyen connu de l'homme du métier permettant d'ajuster la hauteur. Par exemple, et non limitativement, ces moyens de réglage 7 consistent en des coulisses.

Ces moyens de réglage 7 permettent ainsi de régler la distance séparant ledit rouleau 5 de ladite bande de transfert 3.

En d'autres termes, lesdits moyens de réglage 7 ont pour fonction de permettre un ajustement de la position du rouleau 5 avant l'opération de marquage desdites pièces 2 supportées par ladite bande 3, de manière à ce qu'il y ait un contact entre le rouleau 5 et lesdites pièces 2 pendant l'opération de marquage.

Avantageusement, ladite partie menée 31 de ladite bande de transfert 3 est associée à des moyens amortisseurs 8.

Lesdits moyens amortisseurs 8 permettent d'éviter l'écrasement par ledit rouleau 5 desdites pièces 2 présentant des hauteurs les plus élevées, ceci lors de l'opération de marquage.

De manière plus précise, même en sortie d'une enrobeuse industrielle, il existe des variations minimes de la hauteur de chaque pièce de confiserie enrobée de chocolat. Chaque pièce étant unique, il convient que chacune d'entre elle puisse entrer en contact avec ledit rouleau 5 et son motif 6. Pour ce faire, dans un processus d'industrialisation, la hauteur du rouleau 5 va être réglée de manière à ce que le motif 6 puisse entrer en contact avec les pièces 2 présentant une hauteur minimale. Afin d'éviter l'écrasement par le rouleau 5 des pièces 2 de hauteur supérieure à ladite hauteur minimale, la bande de transfert 3, plus spécifiquement sa partie menée 31 supportant les pièces 2, est associée à des moyens amortisseurs 8. Ces moyens amortisseurs 8 vont permettre un abaissement de la partie menée 31 lors du passage dudit rouleau 5 et ainsi empêcher l'écrasement des pièces 2 de hauteur plus élevée que la hauteur minimale, ceci sans empêcher toutefois le contact entre le motif 6 du rouleau 5 et lesdites pièces 2.

Selon une autre particularité de l'invention, ledit dispositif 1 comporte, de plus, des moyens 9 de réfrigération et de maintien à une température constante dudit rouleau 5.

Selon un mode de réalisation particulier et préférentiel, lesdits moyens 9 consistent par exemple en un circuit interne de circulation d'eau glycolée à une température comprise entre -15 et -6°C, de préférence -12°C au sein dudit rouleau 5.

Ledit rouleau 5 étant préférentiellement en un métal conducteur, avantageusement en aluminium, la circulation d'eau glycolée à ces températures va permettre d'assurer le maintien à une température de -10°C environ de la surface cylindrique dudit rouleau 5 destinée à entrer en contact avec lesdites pièces 2.

Tel qu'illustré sur la figure 2, le rouleau 5 est muni d'un motif 6 en relief qui va se retrouver marqué lors de l'opération de marquage sur lesdites pièces 2 enrobées de chocolat.

Selon un mode de réalisation particulier, ledit rouleau 5 présente avantageusement un motif 6 avec une profondeur de gravure dans l'épaisseur du cylindre du rouleau comprise entre 0,22 mm et 0,27 mm, préférentiellement 0,25 mm et une largeur des traits de gravure compris entre 0,8 mm et 1,2 mm, de préférence 1 mm.

Ainsi, le dispositif de marquage 1 de l'invention permet d'industrialiser et d'automatiser le processus de marquage de pièces 2 enrobées de chocolat, et de marquer l'intégralité des pièces 2 de manière pêle-mêle, en garantissant que chacune des pièces soit marquée de manière homogène.

La présente invention concerne également une enrobeuse 10 à chocolat de pièces de confiserie comprenant un circuit d'enrobage. Ledit circuit étant munis d'au moins de moyens pour tempérer le chocolat, de moyens de recouvrement de chocolat des pièces de confiserie et de moyens de déplacement desdites pièces sur l'intégralité dudit circuit d'enrobage.

Ladite enrobeuse 10 à chocolat de l'invention comporte en aval et en sortie dudit circuit d'enrobage, ledit dispositif de marquage 1 de pièces de confiserie enrobées de chocolat 2 susmentionnées.

Ainsi, en sortie dudit circuit d'enrobage, les pièces 2 étant à une température comprise entre 29° C et 32°C, de préférence 30°C, vont entrer en contact avec ledit rouleau 5 réfrigéré pour être marquées d'un motif 6 qui persistera lors de leur refroidissement.

Ainsi, avec l'enrobeuse 10 à chocolat de l'invention, les opérations d'enrobage et de marquage sont réalisées industriellement, par un automate et de manière consécutive.

De manière avantageuse, les moyens de déplacement de ladite enrobeuse 10 sont confondus avec ladite bande de transfert 3 en sortie dudit circuit d'enrobage.

Ainsi, dès la finalisation de l'opération d'enrobage et la fin du circuit d'enrobage, lesdites pièces 2 enrobées de chocolat sont prises en charge pour être marquées par le dispositif 1 muni de son rouleau 5 à motif 6.

Après passage dans l'enrobeuse 10 de l'invention, les pièces 2 sont donc enrobées de chocolat, et présentent sur l'une de leur face un motif 6.

L'utilisation de l'enrobeuse 10 de l'invention permet d'automatiser et d'industrialiser à la fois l'enrobage et le marquage des pièces 2.

Un gain de temps, d'argent et une diminution des erreurs de marquage des pièces 2, résultant de la suppression de l'intervention humaine, est donc possible en utilisant l'enrobeuse de l'invention.

De manière avantageuse, pour limiter encore les risques d'erreur dans l'industrialisation de la production de pièces 2 enrobées de chocolat marquées, ladite enrobeuse 10 comporte une enceinte à hygrométrie contrôlée, ladite enceinte contenant au moins le dispositif de marquage 1.

Selon un autre mode de réalisation, ladite enceinte à hygrométrie contrôlée englobe l'intégralité de l'enrobeuse 10, de manière à éviter une production défaillante des pièces 2.

Selon un mode de réalisation spécifique, le degré d'hygrométrique au sein de ladite enceinte est compris entre 30% et 40%, de manière à éviter un blanchiment des pièces 2 marquées enrobées de chocolat.

D'autre part, afin d'éviter la formation de givre à la surface du rouleau 5, ce qui est susceptible de provoquer le blanchiment du chocolat même sous contrôle de l'hygrométrie dans l'enceinte, le dispositif comporte des moyens de génération d'un flux d'air froid et sec dirigé vers la surface du rouleau 5, et qui se présentent, non limitativement, sous la forme d'une soufflerie 12 disposée entre l'enrobeuse 10 et le rouleau 5.

Cette soufflerie 12 comporte une buse 120 dirigée vers le rouleau 5, sur toute la longueur de celui-ci, selon une génératrice. L'air froid et sec est projeté, sous une pression comprise entre 0,5 et 1 bar, sur le rouleau 5 immédiatement en amont de la zone d'entrée en contact avec les pièces de confiserie.

Ainsi, l'enrobeuse 10 de la présente invention a pour avantage d'industrialiser le processus de marquage en sortie du processus d'enrobage en supprimant l'intervention humaine et manuelle d'un opérateur pour marquer de manière pêle-mêle des pièces 2 enrobées de chocolat sortant d'une enrobeuse.

Ainsi, toutes les erreurs liées à l'intervention humaine pour les marquages de l'art antérieur sont éliminées par la présente invention. Le risque d'oublier de marquer des pièces 2, de réaliser le marquage à une température inadéquate, de faire un marquage partiel sur une pièce 2 ou de blanchiment du chocolat devient inexistant avec le dispositif 1 et l'enrobeuse de l'invention.

En outre, la présence du rouleau 5 à température contrôlée constante permet d'éviter toutes erreurs de marquage résultant d'une température inadéquate.

Ainsi, à la fois le dispositif 1 de l'invention et l'enrobeuse permettent une automatisation et industrialisation du marquage des pièces enrobées de chocolat.

## Revendications

1. Dispositif de marquage (1) de pièces de confiserie enrobées de chocolat (2) **caractérisé en ce qu'**il comporte :
- une bande de transfert (3) desdites pièces de confiserie enrobées de chocolat (2),
- un rouleau de marquage (5) dont la surface cylindrique présente un motif en relief (6), monté en rotation (R) au-dessus de ladite bande de transfert (3) et transversalement au sens de déplacement (F) de cette dernière,
- des moyens de réglage de la hauteur (7) dudit rouleau (5) par rapport à ladite bande (3) et de la distance le séparant de celle-ci,
- des moyens internes de réfrigération et de maintien (9) à une température constante dudit rouleau (5),
- des moyens (12) de génération d'un flux d'air froid et sec dirigé vers la surface du rouleau (5), en amont de la zone d'entrée en contact de celui-ci avec lesdites pièces de confiserie (2).

2. Dispositif de marquage (1) de pièces de confiserie enrobées de chocolat (2) selon la revendication précédente, **caractérisé en ce que** la partie menée (31) de ladite bande de transfert (3) est associée à des moyens amortisseurs (8).

3. Dispositif de marquage (1) de pièces de confiserie enrobées de chocolat (2) selon la revendication 1 ou la revendication 2, **caractérisé en ce que** le rouleau (5) est mû en rotation à une vitesse linéaire égale à la vitesse de déplacement de la bande de transfert (3).

4. Dispositif de marquage (1) de pièces de confiserie enrobées de chocolat (2) selon l'une quelconque des revendication 1 à 3, **caractérisé en ce que** les moyens de génération d'un flux d'air froid et sec dirigé vers la surface du rouleau 5, se présentent sous la forme d'une soufflerie (12) disposée en avant, par rapport au sens (F) de déplacement de la bande de transfert (3), du rouleau (5), comportant une buse (120) dirigée vers ledit rouleau (5), sur toute la longueur de celui-ci, selon une génératrice, l'air froid et sec étant projeté sous une pression comprise entre 0,5 et 1 bar.

5. Enrobeuse à chocolat (10) de pièces de confiserie comprenant un circuit d'enrobage muni d'au moins de moyens pour tempérer le chocolat, de moyens de recouvrement de chocolat et de moyens de déplacement desdites pièces sur l'intégralité dudit circuit d'enrobage, **caractérisée en ce qu'**elle comporte en aval, et en sortie dudit circuit d'enrobage, le dispositif de marquage (1) de pièces de confiserie enrobées de chocolat (2) selon l'une quelconque des revendications précédentes.

6. Enrobeuse à chocolat (10) selon la revendication précédente, **caractérisée en ce que** les moyens de déplacement de ladite enrobeuse sont confondus avec ladite bande de transfert (3) en sortie dudit circuit d'enrobage.

7. Enrobeuse à chocolat (10) selon la revendication précédente, **caractérisée en ce qu'**elle comporte une enceinte à hygrométrie contrôlée, ladite enceinte contenant au moins le dispositif de marquage (1).
